(19) Europäisches Patentamt
European Patent Office
Office européen des brevets

(11) Veröffentlichungsnummer: **0 281 750 B1**

(12) **EUROPÄISCHE PATENTSCHRIFT**

(45) Veröffentlichungstag der Patentschrift: 03.07.91

(51) Int. Cl.⁵: **G02B 13/22**

(21) Anmeldenummer: 88101176.1

(22) Anmeldetag: 27.01.88

(54) **Optische Abtastvorrichtung mit telezentrischer Zeilenkamera.**

(30) Priorität: 12.03.87 DE 3707979

(43) Veröffentlichungstag der Anmeldung:
14.09.88 Patentblatt 88/37

(45) Bekanntmachung des Hinweises auf die
Patenterteilung:
03.07.91 Patentblatt 91/27

(84) Benannte Vertragsstaaten:
BE DE FR GB IT NL SE

(56) Entgegenhaltungen:
US-A- 4 592 625

PATENT ABSTRACTS OF JAPAN, Band 6, Nr.
234 (E-143)[1112], 20. November 1982; & JP -
A - 57 135 577

PATENT ABSTRACTS OF JAPAN, Band 2, Nr.
125 (E-78), 20. Oktober 1978, Seite 7468; & JP
- A - 53 91754

PATENT ABSTRACTS OF JAPAN, Band 9, Nr.
182 (P-376)[1905], 27. Juli 1985; & JP - A - 60
52819

(73) Patentinhaber: Erwin Sick GmbH Optik-
Elektronik
Sebastian-Kneipp-Strasse 1
W-7808 Waldkirch(DE)

(72) Erfinder: Hippenmeyer, Heinrich
Wiesenstrasse 13
W-7831 Freiamt/Brsg.(DE)

(74) Vertreter: Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22(DE)

**Beschreibung**

Die Erfindung betrifft eine optische Abtastvorrichtung für einen linienförmigen Bereich auf der Oberfläche eines Objektes mit einer Diodenzeilenkamera mit objektseitig telezentrischem Abbildungssystem.

Das Ziel der Erfindung besteht darin, daß bei Defokussierung innerhalb des gesamten Schärfebereiches die Bildgröße konstant bleibt.

Die Erfindung kennzeichnet sich dadurch, daß die Pupille des normalen, nicht telezentrischen Kameraobjektivs in der Brennebene eines sphärischen Hohlspiegelstreifens angeordnet ist, der parallel zur Richtung der Diodenzeile liegt, und daß Hohlspiegelstreifen und Kameraobjektiv zusammen den linienförmigen Bereich auf die Diodenzeile abbilden.

Kameras und insbesondere auch Zeilenkameras mit objektseitig telezentrischem Abbildungssystem bieten gegenüber nicht telezentrischen Kameras den Vorteil, daß bei Defokussierung der Abbildungsoptik, z.B. durch Ändern des Abstandes Objekt-Kameraobjektiv, innerhalb des gesamten Schärfebereichs die Bildgröße konstant bleibt. Das ist vor allem beim Vermessen von Abständen auf der Objektoberfläche von Vorteil. Auch Objektstrukturen mit Tiefenausdehnung innerhalb des Schärfebereiches können so fehlerfrei vermessen werden.

Ein telezentrisches Beobachtungsobjektiv hat einen Frontlinsendurchmesser, der etwas größer ist als die erforderliche Abtastlänge; für 100 mm Abtastlänge beträgt also der Frontlinsendurchmesser z.B. 120 mm. Durch die zusätzliche Anordnung des erfindungsgemäßen streifenförmigen Hohlspiegels kann die Abtastlänge ohne weiteres auf das Zehnfache erhöht werden und kommt damit in einen Bereich, wie er mit den bekannten Laserscannern realisiert werden kann. Es können somit auch telezentrische Beobachtungssysteme für Zeilenkameras verwirklicht werden, die linienförmige Bereiche von 1 bis 2 Metern Länge abtasten.

Zur Realisierung des objektseitig telezentrischen Abbildungssystems wird ein normales Kameraobjektiv so mit einem sphärischen Hohlspiegelstreifen kombiniert, daß das Objekt über diesen Hohlspiegelstreifen und zweckmäßigerweise über einen oder mehrere Umlenkspiegelstreifen durch das Kameraobjektiv auf die Diodenzeile abgebildet wird. Dabei ist die Pupille des Kameraobjektivs in der Brennebene des Hohlspiegels und das Objekt im gleichen oder einem kleineren Abstand vom Hohlspiegel angeordnet.

Befindet sich das Objekt im Abstand der Brennweite vom Hohlspiegel entfernt, so ist das Kameraobjektiv auf Unendlich eingestellt, um eine scharfe Abbildung des linienförmigen Bereichs der Oberfläche des Objekts auf der Diodenzeile zu verwirklichen. Liegt das Objekt näher am Hohlspiegel, als dies seiner Brennweite entspricht, so muß das Kameraobjektiv lediglich auf geringere Entfernungen als Unendlich eingestellt werden, um die Oberfläche des Objekts scharf auf die Diodenzeile abzubilden.

Besonders zweckmäßig ist es, wenn der Hohlspiegel sphärisch ausgebildet ist.

Um den streifenförmigen Hohlspiegel und gegebenenfalls auch die Umlenkspiegel auch für die Beleuchtung des Objektes auszunutzen, sieht eine weitere Ausführungsform der Erfindung vor, daß vor dem Objektiv der Zeilenkamera eine Strahlteilung über einen vorzugsweise physikalischen Teilerspiegel erfolgt, und daß über einen Kollektor eine ähnlich der Diodenzeile streifenförmig ausgebildete Lichtquelle über den Teilerspiegel in den Strahlengang eingekoppelt wird. Das bedeutet, daß bei Verwendung eines spiegelnden Objektes dieses senkrecht in Autokollimation beleuchtet wird. Im Falle von zumindest teilweise transparenten Objekten ist dabei zweckmäßig vorgesehen, daß hinter dem Objekt ein aus vielen Einzelelementen aufgebauter Retroreflektor angeordnet ist, der streifenförmig ausgebildet ist und parallel zum Hohlspiegel verläuft.

Die Erfindung wird im folgenden beispielsweise anhand der Zeichnung beschrieben; in dieser zeigt:

Fig. 1     in schematischer Seitenansicht das Grundprinzip des Strahlenganges einer erfindungsgemäßen optischen Abtastvorrichtung, wobei der streifenförmige Hohlspiegel der Einfachheit der Darstellung halber als Linse wiedergegeben ist,

Fig. 2     eine optische Abtastvorrichtung für ein transparentes Objekt mit zusätzlicher Darstellung des Beleuchtungsstrahlenganges,

Fig. 3     eine Draufsicht der optischen Abtastvorrichtung nach Fig. 2, und

Fig. 4     eine weitere Ausführungsform einer optischen Abtastvorrichtung in einer Seitenansicht analog Fig. 2.

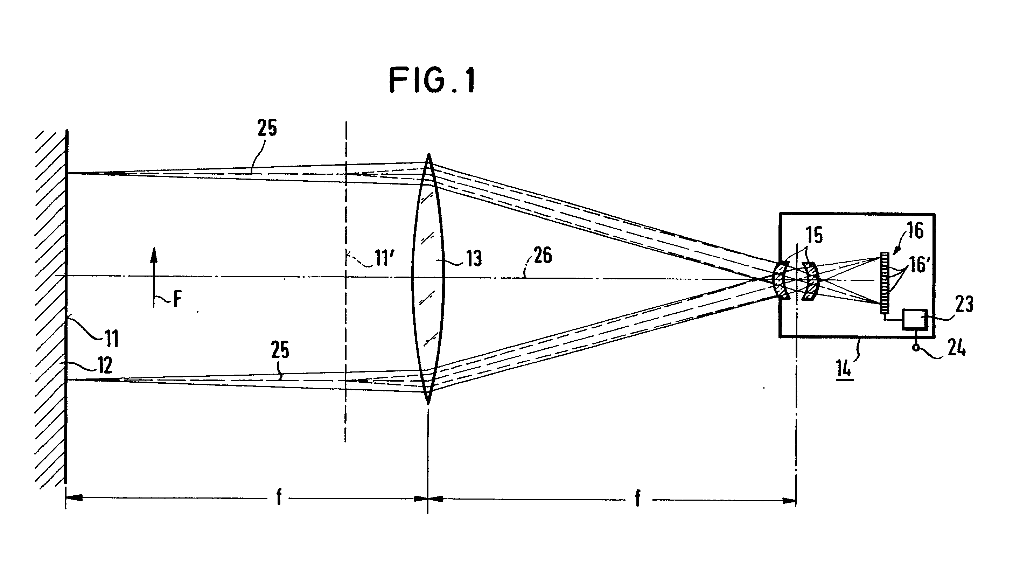

In Fig. 1 ist ein gestreckter Aufbau dargestellt, bei dem der Hohlspiegel und seine erforderlichen Umlenkspiegel durch eine streifenförmige Linse 13 gleicher Brennweite ersetzt ist, um den Verlauf der Strahlenbündel anschaulicher zu machen, durch welche die Punkte des linienförmigen Bereichs auf der beleuchteten oder selbstleuchtenden Oberfläche 11 des Objekts 12 auf die Einzeldioden 16' der Diodenzeile 16 einer Diodenzeilenkamera 14 abgebildet werden. Im folgenden Beschreibungstext zu Fig. 1 wird jedoch wieder von dem streifenförmigen Hohlspiegel 13 gleicher Brennweite gesprochen.

Die Diodenzeilenkamera 14 weist ein Objektiv 15 auf, welches die Oberfläche 11 des Objekts 12 über den streifenförmigen Hohlspiegel 13 auf die Diodenzeile 16 abbildet. Die Diodenzeile 16 ist an eine Elektronik 23 angeschlosen, welche die Einzeldioden 16' der Zeile nacheinander abfragt und so erkennt, an welcher Stelle auf der Oberfläche 11 des Objektes 12 ein Fehler vorhanden ist. Ein entsprechendes Fehlersignal wird am Ausgang 24 der Elektronik 23 abgegeben.

Der auf der Objektseite telezentrische Strahlengang ist daran zu erkennen, daß die objektseitigen Hauptstrahlen 25 parallel zueinander verlaufen, bevor sie auf den Hohlspiegel 13 auftreffen. Nach Fig. 1 ist die Oberfläche 11 des Objektes 12 im Abstand der Brennweite f vom Hohlspiegel 13 parallel zu diesem angeordnet. Das Objektiv 15 der Diodenzeilenkamera 14 weist unabhängig von seiner eigenen Brennweite ebenfalls einen Abstand entsprechend dieser Brennweite f vom Hohlspiegel 13 auf. Aufgrund der Anordnung des Objektes 12 in der vorderen Brennebene des Hohlspiegels 13 wirkt dieser wie eine Lupe und bildet die Oberfläche 11 des Objektes nach Unendlich ab. Das Objektiv 15 der Diodenzeilenkamera 14 ist ebenfalls auf Unendlich eingestellt, so daß der linienförmige Bereich auf der Oberfläche 11 scharf auf die Diodenzeile 16 abgebildet wird.

Wird die Oberfläche 11 des Objektes 12 näher an den streifenförmigen Hohlspiegel 13 herangerückt, und zwar z.B. in die in Fig. 1 gestrichelt dargestellte Position 11', so bleibt objektseitig der telezentrische Strahlengang bestehen, doch wirkt nunmehr der streifenförmige Hohlspiegel 13 nur noch als Feldlinse, und das Objektiv 15 der Diodenzeilenkamera 14 muß auf eine entsprechend kürzere Entfernung eingestellt werden.

In beiden Fällen wird die im Objekt abgetastete Länge durch die Länge des streifenförmigen Hohlspiegels 13 begrenzt, ist also um ein Vielfaches größer als der Durchmesser des Kameraobjektivs 15.

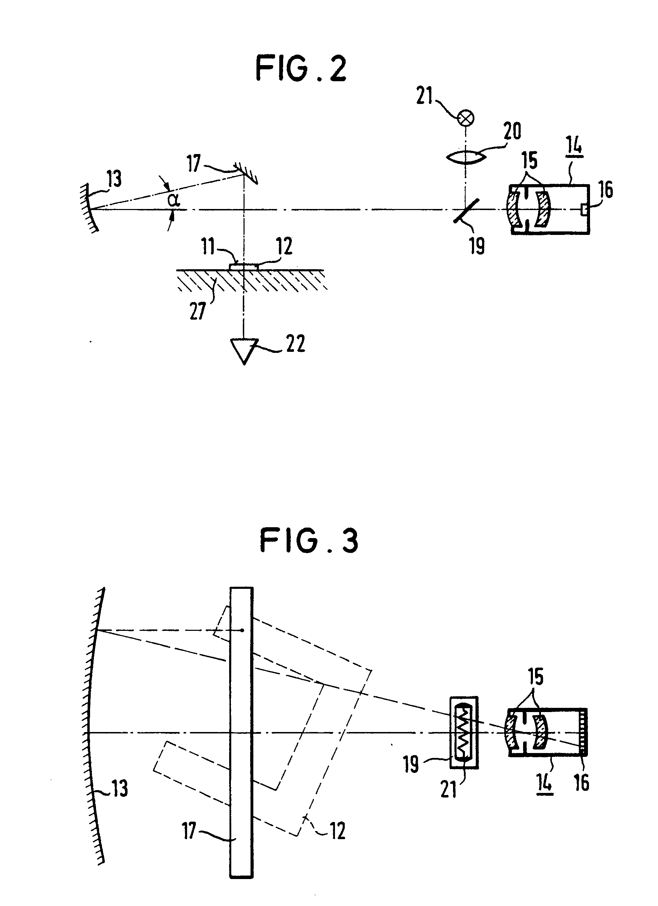

Nach den Fig. 2 und 3 ist das abzutastende Objekt 12 auf einem transparenten Träger 27 angeordnet, unterhalb dessen ein Retroreflektor 22 vorgesehen ist, der parallel zu einem oberhalb des Objektes 12 vorgesehenen planen und streifenförmigen Umlenkspiegel 17 verläuft. Der Retroreflektor 22, der aus einer streifenförmigen Anordnung von kleinen Tripelspiegeln oder einer Perlleinwand (Scotchlite) besteht, wird in einem solchen Abstand hinter dem Objekt angeordnet, daß seine Struktur außerhalb der Schärfentiefe der Abbildungseinrichtung liegt. Der Umlenkspiegel 17 ist parallel zum streifenförmigen Hohlspiegel 13 angeordnet und wirft das vom Reflektor 22 bzw. dem Objekt 12 kommende Licht so auf den Hohlspiegel 13, daß es unter einem kleinen Winkel α zum Objektiv 15 der Diodenzeilenkamera 14 gelenkt wird. Das Objekt 12 ist in den Fig. 2 und 3 in einem kleineren Abstand als der Brennweite vom Hohlspiegel 13 angeordnet, so daß die Abbildungsverhältnisse der Anordnung des Objekts in der Position 11' in Fig. 1 entsprechen.

Unmittelbar vor dem Objektiv 15 ist ein Strahlenteiler 19 vorgesehen, über den durch ein Objektiv 20 und eine streifenförmige Lichtquelle 21 auch noch ein Beleuchtungsstrahlengang eingekoppelt wird. Die linienförmige Ausdehnung der Lichtquelle 21 entspricht der linienförmigen Ausdehnung der Diodenzeile 16, so daß auf der Oberfläche 11 des Objektes 12 eine entsprechend um ein Vielfaches verlängerte Beleuchtungslinie erzeugt wird. Mit anderen Worten wird der linienförmige Bereich auf der Oberfläche 11 des Objektes 12 über die gesamte Längenerstreckung des Hohlspiegels 13 von der Lichtquelle 21 beleuchtet.

Der streifenförmige Umlenkspiegel 17 und der Retroreflektor 22 verlaufen parallel zueinander und zum streifenförmigen Hohlspiegel 13 und weisen auch entsprechende Längen auf.

Aus Fig. 2 geht weiter hervor, daß im Falle eines reflektierenden Objektes 12 die Anordnung dieses Objekt 12 in Autokollimation beleuchtet.

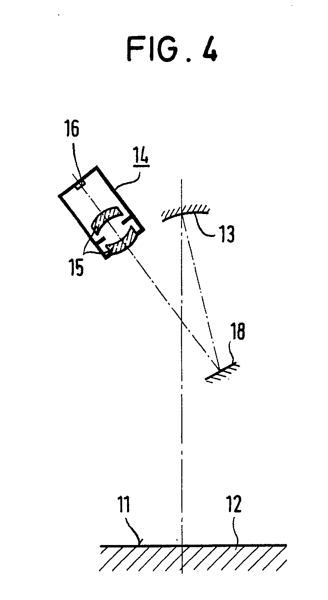

Bei der Ausführungsform nach Fig. 4 ist die Oberfläche 11 des Objektes 12 im Abstand der Brennweite vom Hohlspiegel 13 angeordnet, wobei ein streifenförmiger planer Umlenkspiegel 18 zwischen dem Hohlspiegel 13 und der Diodenzeilenkamera 14 vorgesehen ist. Optisch befindet sich also die Diodenzeilenkamera 14 im gleichen Abstand vom Hohlspiegel 13 wie das Objekt 12.

**Ansprüche**

1. Optische Abtastvorrichtung für einen linienförmigen Bereich auf der Oberfläche (11) eines Objektes (12), bestehend aus einer Diodenzeilen-Kamera (14) mit einem objektseitig telezentrischen Abbildungssystem, dadurch **gekennzeichnet,** daß die Pupille des normalen, nicht telezentrischen Kameraobjektivs (15) in der Brennebene eines sphärischen Hohlspiegelstreifens (13) angeordnet ist, der parallel zur Richtung der Diodenzeile (16) liegt, und daß Hohlspiegelstreifen (13) und Kameraobjektiv (15) zusammen den linienförmigen Bereich auf die Diodenzeile (16) abbilden.

2. Abtastvorrichtung nach Anspruch 1, dadurch **gekennzeichnet,** daß die Oberfläche (11) des Objektes (12) im Abstand der Brennweite des Hohlspiegels (13) von diesem entfernt angeordnet ist.

3. Abtastvorrichtung nach Anspruch 1, dadurch **gekennzeichnet,** daß das Objekt (12) in einem Abstand vom Hohlspiegel (13) liegt, der kleiner als dessen Brennweite ist.

4. Abtastvorrichtung nach einem der vorhergehenden Ansprüche, dadurch **gekennzeichnet,** daß zwischen dem Objekt (12) und dem Hohlspiegel (13) ein planer Umlenkspiegel (17) angeordnet ist.

5. Abtastvorrichtung nach einem der vorhergehenden Ansprüche, dadurch **gekennzeichnet,** daß zwischen dem Hohlspiegel (13) und dem Objektiv (15) ein planer Umlenkspiegel (18) angeordnet ist.

6. Abtastvorrichtung nach einem der vorhergehenden Ansprüche, dadurch **gekennzeichnet,** daß vor dem Objektiv (15) der Zeilenkamera (14) eine Strahlteilung über einen vorzugsweise physikalischen Teilerspiegel (19) erfolgt, und daß über ein weiteres Objektiv (20) eine ähnlich der Diodenzeile (16) streifenförmig ausgebildete Lichtquelle (21) über den Teilerspiegel (19) in den Strahlengang eingekoppelt wird.

7. Abtastvorrichtung nach Anspruch 6, dadurch **gekennzeichnet,** daß bei Verwendung eines spiegelnden Objektes (12) dieses senkrecht in Autokollimation beleuchtet wird.

8. Abtastvorrichtung nach Anspruch 6 für zumindest teilweise transparente Objekte, dadurch **gekennzeichnet,** daß hinter dem Objekt (12) ein aus vielen Einzelelementen zusammengesetzter Retroreflektor (22) angeordnet ist, der streifenförmig ausgebildet ist und parallel zum Hohlspiegel (13) verläuft.

**Claims**

1. Optical scanning apparatus for a linear zone on the surface (11) of an object (12) comprising a diode row camera (14) with a telecentric imaging system at the object side, characterised in that the pupil of the normal non-telecentric camera objective (15) is arranged in the focal plane of a spherical concave mirror strip (13) which lies parallel to the direction of the diode row (16); and in that the concave mirror strip (13) and the camera objective (15) jointly form the image of the linear zone on the diode row (16).

2. Scanning apparatus in accordance with claim 1, characterised in that the surface (11) of the object (12) is arranged spaced from the concave mirror (13) by the distance of the focal length of the concave mirror (13).

3. Scanning apparatus in accordance with claim 1, characterised in that the object (12) lies at a distance from the concave mirror (13) which is smaller than its focal length.

4. Scanning apparatus in accordance with one of the preceding claims, characterised in that a plane deflecting mirror (17) is arranged between the object (12) and the concave mirror (13).

5. Scanning apparatus in accordance with one of the preceding claims, characterised in that a plane deflecting mirror (18) is arranged between the concave mirror (13) and the objective (15).

6. Scanning apparatus in accordance with one of the preceding claims, characterised in that a beam division takes place in front of the objective (15) of the row camera (14) via a dividing mirror (19), preferably a physical dividing mirror, and in that via a further objective (20) a light source (21) which is of strip-like construction similar to the diode row (16) is coupled into the beam path via the dividing mirror (19).

7. Scanning apparatus in accordance with claim 6, characterised in that on using a specularly reflecting object (12) the latter is normally illuminated in autocollimation.

8. Scanning apparatus in accordance with claim 6 for at least partially transparent objects, characterised in that a retroreflector (22) composed of many individual elements is arranged behind the object, is of strip-like construction, and extends parallel to the concave mirror (13).

**Revendications**

1. Système optique de balayage d'une zone de forme linéaire à la surface (11) d'un objet (12), comprenant une caméra (14) a rangée de diodes comportant du côté objet un système télécentrique de formation d'image, caractérisé en ce que la pupille de l'objectif (15) normal, non télécentrique de la caméra est disposé dans le plan focal d'une bande de miroir sphérique concave (13) disposée parallèlement à la direction de la rangée de diodes (16), et en ce que la bande de miroir concave (13) et l'objectif (15) de caméra forment ensemble l'image de la zone linéaire sur la rangée de diodes (16).

2. Système de balayage selon la revendication 1, caractérisé en ce que la surface (11) de l'objet (12) est éloignée du miroir concave (13) d'une distance égale à la distance focale du miroir concave (13).

3. Système de balayage selon la revendication 1, caractérisé en ce que l'objet (12) est placé a une distance du miroir concave (13) inférieure à la distance focale de ce dernier.

4. Système de balayage selon l'une des revendications précédentes, caractérisé en ce qu'un miroir plan de renvoi (17) est disposé entre l'objet (12) et le miroir concave.

5. Système de balayage selon l'une des revendications précédentes, caractérisé en ce qu'un miroir plan de renvoi (18) est disposé entre le miroir concave (13) et l'objectif (15).

6. Système de balayage selon l'une des revendications précédentes, caractérisé en ce qu'une division du faisceau est effectuée en avant de l'objectif (15) de la caméra linéaire (14) au moyen d'un miroir diviseur (19), de préférence un miroir diviseur physique, et en ce qu'une source lumineuse (21) ayant une structure en forme de bande semblable à la rangée de diodes (16) est couplée dans trajet du faisceau au moyen d'un autre objectif (20) via le miroir diviseur (19).

7. Système de balayage selon la revendication 6, caractérisé en ce que lorsqu'on utilise un objet (12) réfléchissant à la manière d'un miroir, ce dernier est éclairé perpendiculairement en autocollimation.

8. Système de balayage selon la revendication 6 pour des objets au moins transparents, caractérisé en ce qu'un rétroréflecteur (22) composé de plusieurs éléments individuels est disposé derrière l'objet, le rétroréflecteur (22) étant réalisé en forme de bande et s'étendant parallèlement au miroir concave (13).

FIG.1

# FIG.2

# FIG.3

# FIG . 4